# EUROPEAN PATENT APPLICATION

(11) **EP 4 135 062 A1**
(43) Date of publication of application: **15.02.2023**
(21) Application number: 22189785.3
(22) Date of filing: 10.08.2022
(51) Int. Cl.: H01M 4/04, H01M 4/36, H01M 4/583, H01M 4/62

(54) **ANODE FOR SECONDARY BATTERY AND SECONDARY BATTERY INCLUDING THE SAME**

(30) Priority: 13.08.2021 KR 20210107207
(71) Applicant: SK On Co., Ltd., Seoul 03161 (KR)
(72) Inventor: PARK, So Hyun, 34124 Daejeon (KR); KANG, Hee Gyoung, 34124 Daejeon (KR); JEON, Chan Young, 34124 Daejeon (KR); HWANG, Hae Suk, 34124 Daejeon (KR)
(74) Representative: Stolmár & Partner Patentanwälte PartG mbB

(57) **Abstract**

An anode for a secondary battery includes first anode active material particles in a form of a single particle, each of the first anode active material particles including a core particle and a coating layer formed on a surface of the core particle, and second anode active material particles including a carbon-based material and having an assembly form of a plurality of sub-particles. A secondary battery including the anode and having improved capacity properties and stability is provided.

## Description

### CROSS-REFERENCE TO RELATED APPLICATION

This application claims priority to Korean Patent Application No. 10-2021-0107207 filed on August 13, 2021 in the Korean Intellectual Property Office (KIPO), the entire disclosure of which is incorporated by reference herein.

### BACKGROUND

### 1. Field

The present invention relates to an anode for a secondary battery and a secondary battery including the same. More particularly, the present invention relates to an anode for a secondary battery including different types of particles and a secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

For example, the anode may include a carbon-based active material or silicon-based active material particles as an anode active material. When the battery is repeatedly charged/discharged, side reactions due to a contact with the electrolyte may occur, and mechanical and chemical damages such as particle cracks may be caused.

If a composition and a structure of the anode active material are changed to improve stability of the active material particles, a conductivity may be degraded and a power of the secondary battery may be deteriorated.

Thus, developments of the anode active material capable of enhancing life-span stability and power/capacity properties are needed.

### SUMMARY

According to an aspect of the present invention, there is provided an anode for a secondary battery having improved stability and activity.

According to an aspect of the present invention, there is provided a secondary battery having improved stability and activity.

According to an aspect of the present invention, there is provided a method of fabricating an anode for a secondary battery having improved stability and activity.

An anode for a secondary battery according to embodiments of the present invention includes first anode active material particles in a form of a single particle, each of the first anode active material particles comprising a core particle and a coating layer formed on a surface of the core particle, and second anode active material particles including a carbon-based material and having an assembly form of a plurality of sub-particles.

In some embodiments, the core particle may include a graphite-based active material, an amorphous carbon-based material or a mixture of the graphite-based active material and the amorphous carbon-based material.

In some embodiments, the core particle may include artificial graphite.

In some embodiments, the coating layer may be formed of an amorphous carbon-based material.

In some embodiments, the coating layer may be formed from pitch particles.

In some embodiments, the average particle diameter of the pitch particles used to form the coating layer may be in a range from 1.5 µm to 3 µm.

In some embodiments, a maximum particle diameter of the pitch particles used to form the coating layer may be 20 µm or less.

In some embodiments, an average particle diameter of the core particle may be in a range from 5 µm to 10 µm.

In some embodiments, a content of the coating layer may be in a range from 0.5 parts by weight to 3 parts by weight based on 100 parts by weight of the first anode active material particles.

In some embodiments, the second anode active material particles may include a graphite-based active material, an amorphous carbon-based material or a mixture of the graphite-based active material and the amorphous carbon-based material.

In some embodiments, the second anode active material particles may include artificial graphite.

In some embodiments, an average particle diameter of the second anode active material particles may be greater than an average particle diameter of the first anode active material particles.

In some embodiments, an average particle diameter of the second anode active material particles may be in a range from is 14 µm to 18 µm.

In some embodiments, a hardness of the first anode active material particles may be greater than a hardness of the second anode active material particles.

A secondary battery according to embodiments of the present invention includes a cathode including a lithium metal oxide; and the anode for a secondary battery according to the above-described embodiments facing the cathode.

According to exemplary embodiments, an anode active material including a first anode active material particle having a coating layer formed on a core particle and a second anode active material particle may be used. The first anode active material particle including the coating layer to have a high hardness and the second anode active material particle having a relatively low hardness may be used together, so that rate properties of the anode active material may be improved.

Further, the first anode active material particle and the second anode active material particle may be used together so that pressing properties and charging capacity of the anode active material may be improved.

According to exemplary embodiments, properties of the coating layer may be appropriately adjusted according to properties of the core particles. Accordingly, a uniform coating layer may be formed on a surface of the core particle, so that an electrolyte resistance and high temperature storage property of the core particle may be improved.

### BRIEF DESCRIPTION OF THE DRAWINGS

FIG. 1 is a schematic cross-sectional view illustrating an anode for a secondary battery in accordance with exemplary embodiments.
FIG. 2 is a schematic top plan view illustrating a secondary battery in accordance with exemplary embodiments.
FIG. 3 is a schematic cross-sectional view illustrating a secondary battery in accordance with exemplary embodiments.

### DETAILED DESCRIPTION OF THE EMBODIMENTS

According to exemplary embodiments of the present invention, an anode for a secondary battery which includes a first anode active material particle and a second anode active material particle having different structures and shapes is provided. Further, a secondary battery including the anode for a secondary battery is provided.

Hereinafter, the present invention will be described in detail with reference to the accompanying drawings. However, those skilled in the art will appreciate that such embodiments described with reference to the accompanying drawings are provided to further understand the spirit of the present invention and do not limit subject matters to be protected as disclosed in the detailed description and appended claims.

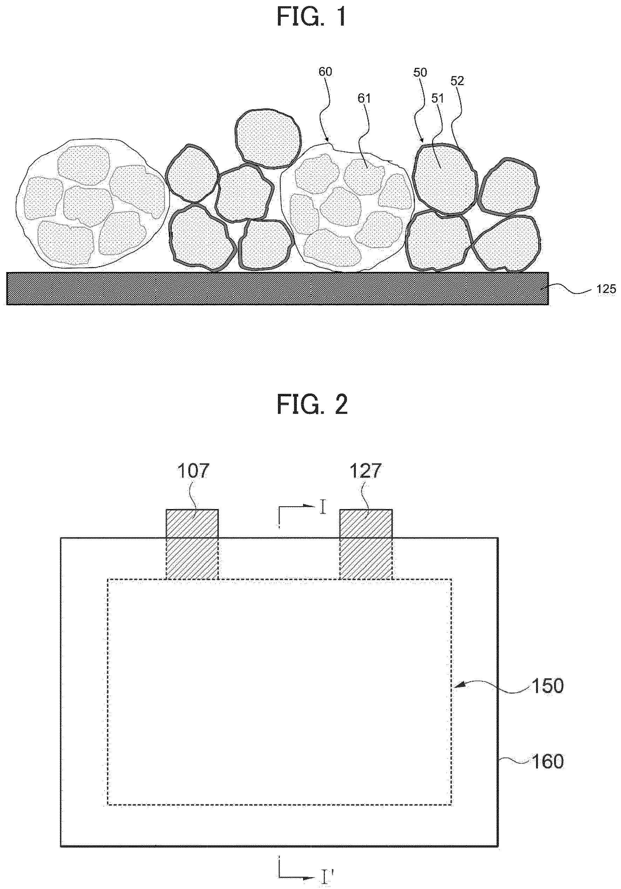

FIG. 1 is a schematic cross-sectional view illustrating an anode for a secondary battery in accordance with exemplary embodiments.

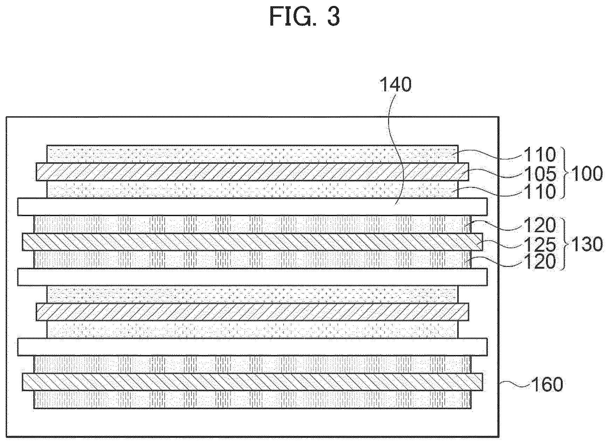

Referring to FIG. 1, an anode for a secondary battery may include an anode current collector 125 and an anode active material layer 120 (see FIG. 3) formed on the anode current collector 125.

The anode active material layer 120 may include an anode active material including a first anode active material particle 50 and a second anode active material particle 60. The anode active material may include a plurality of the first anode active material particles 50 and a plurality of the second anode active material particles 60.

In exemplary embodiments, the first anode active material particles 50 and the second anode active material particles 60 may be include in an amount of 80 wt% or more, 85 wt% or more, 90 wt% or more, 95 wt% or more, or 98 wt% or more based on a total weight of the anode active material. In an embodiment, the anode active material may substantially consist of the first anode active material particles 50 and the second anode active material particles 60.

The first anode active material particle 50 may include a core particle 51 and a coating layer 52 formed on a surface of the core particle 51. In some embodiments, the first anode active material particles 50 may each have a single particle shape including the core particle 51 and the coating layer 52.

The core particle 51 may serve as a particle providing an activity of the anode. For example, the core particle 51 may include a graphite-based active material and/or an amorphous carbon-based material. In an embodiment, the core particle 51 may include the graphite-based material such as artificial graphite and/or natural graphite.

In some embodiments, the core particle 51 may include artificial graphite. Artificial graphite may have a smaller capacity than that of natural graphite, but may have relatively high chemical and thermal stability. Accordingly, storage stability or life-span properties of the secondary battery may be improved by employing artificial graphite as the core particle 51.

Additionally, the coating layer 52 may be formed on the surface of the core particle 51, so that a hardness of the first anode active material particle 50 may be improved, and sufficient electrolyte resistance, high temperature storage property and rate properties may be provided.

In some embodiments, the core particle 51 may include an amorphous carbon-based material. Examples of the amorphous carbon-based material include glucose, fructose, galactose, maltose, lactose, sucrose, a phenolic resin, a naphthalene resin, a polyvinyl alcohol resin, a urethane resin, a polyimide resin, a furan resin, a cellulose resin, an epoxy resin, a polystyrene resin, a resorcinol-based resin, a phloroglucinol-based resin, a coal-based pitch, a petroleum-based pitch, tar, a low molecular weight heavy oil, etc. These may be used alone or in combination thereof.

In an embodiment, the core particle 51 may include a mixture of the graphite-based active material and the amorphous carbon-based material.

An average particle diameter (D₅₀) of the core particles 51 may be in a range from about 1 µm to about 10 µm. D₅₀ may refer to a particle diameter at 50% by volume in a cumulative particle size distribution. Preferably, the average particle diameter (D₅₀) of the core particles 51 may be in a range from about 5 µm to 9 µm. In the above range, pressing and capacity properties may be sufficiently improved when mixed with the second anode active material particle 60.

In some embodiments, the coating layer 52 may be formed on at least a portion of the surface of the core particle 51. In an embodiment, the coating layer 52 may be distributed on the surface of the core particle 51 in the form of islands separated from each other. In a preferable embodiment, an outer surface of the core particle 51 may be substantially and entirely surrounded by the coating layer 52.

The coating layer 52 may be formed from an amorphous carbon-based material. In a preferable embodiment, the coating layer 52 may be formed from pitch. Examples of pitch may include a coal-based pitch, a mesophase pitch, a petroleum-based pitch, etc. The coating layer 52 formed from pitch may include a pitch carbide, a mesophase pitch carbide, soft carbon, hard carbon or a combination thereof.

In some embodiments, pitch particles refer to carbon-based particles included in pitch. An average particle diameter (D₅₀) of the pitch particles used for forming the coating layer 52 may be in a range from 1.5 µm to 3 µm. In the above range, the outer surface of the core particle 51 may be substantially and entirely surrounded by the coating layer 52, and the high temperature storage and rate properties of the anode may be sufficiently improved.

For example, if the average particle diameter (D₅₀) of the pitch particles is less than 1.5 µm, the thickness of the coating layer 52 included in the first anode active material particles 50 may not be uniform. If the average particle diameter (D₅₀) of the pitch particles exceeds 3 µm, excessive aggregation of the pitch particles may be caused on the surface of the core particles 51 .

In some embodiments, a maximum particle diameter (Dₘₐₓ) of the pitch particles may be less than or equal to 18 µm. In this range, the outer surface of the core particle 51 may be substantially and entirely surrounded by the uniform coating layer 52. Thus, the high-temperature storage and rate properties of the anode active material including a primary particle or the single particle may be sufficiently improved.

For example, if the maximum particle diameter of the pitch particles is 20 µm or more, the maximum particle diameter of the pitch particle may be relatively increased when compared to that of the core particle 51. Accordingly, aggregation of the pitch particles on the surface of the core particle 51 may easily occur. Thus, the maximum particle diameter of the pitch particles may be 20 µm or less, preferably 18 µm or less, more preferably 15 µm or less.

For example, the thickness of the coating layer 52 may be in a range from about 0.01 µm to 3 µm, preferably from 0.1 µm to 2.5 µm, more preferably from 0.3 µm to 2 µm. In the above thickness range, the high-temperature storage and rate properties of the anode may be sufficiently improved. If the thickness of the coating layer 52 is less than the above range, decomposition of the core particle 51 by an electrolyte may be accelerated. If the thickness of the coating layer 52 is above the above range, the high rate property from the single particle may be degraded.

In some embodiments, a content of the coating layer 52 may be in a range from 0.5 parts by weight to 3 parts by weight based on 100 parts by weight of the first anode active material particles 50. Preferably, the content ratio of the coating layer 52 may be in a range from 0.5 parts by weight to 2.0 parts by weight, more preferably from 0.75 parts by weight to 1.5 parts by weight.

In the above content range, high-temperature storage property and thermal stability derived from the core particle 51 may be sufficiently achieved without damaging the rate properties of the first anode active material particles 50.

For example, within the above-mentioned content range, a high-temperature storage property may be evaluated as 80% or more, or a high-rate charging property may be evaluated as 70% or more under predetermined evaluation conditions. In some embodiments, within the above-mentioned content range, the high-temperature storage property may be evaluated as 80% or more, or the high-rate charging property may also be evaluated as 80% or more under predetermined evaluation conditions.

For example, if the content of the coating layer 52 is less than 0.5 parts by weight, the core particles 51 may be exposed during a pressing process, and the core particles 51 may be dissolved by the electrolyte. If the content of the coating layer 52 exceeds 3 parts by weight, the pitch particles included in the coating layer 52 may be excessively agglomerated, and the rate properties of the first anode active material particles 50 may be damaged and uniform pressing properties may not be obtained.

The coating layer 52 may cover the core particle 51, so that side reaction, oxidation, corrosion, cracks, etc., on the surface of the core particle 51 may be reduced or prevented. For example, mechanical and chemical damages of the surface of the core particle 51 caused when charging/discharging of the secondary battery is repeated may be suppressed or reduced.

Further, a gas generation due to a side reaction between the core particle 51 and the electrolyte may be prevented. In exemplary embodiments, the coating layer 52 may protect the surface of the core particle 51, so that chemical damages and side reactions due to a direct contact with the electrolyte may be suppressed.

Additionally, expansion of the core particle 51 may be relieved or suppressed by the coating layer 52. Accordingly, cracks in the particles due to swelling and expansion of the core particles 51 that may occur during the repeated charging/discharging may also be suppressed.

In exemplary embodiments, the first anode active material 50 may have a single particle shape or a primary particle shape including the core particle 51 and the coating layer 52 formed on the surface of the core particle 51. The second anode active material particles 60 may include a carbon-based material and have an assembly shape of sub-particles.

The second anode active material particle 60 may include the aforementioned graphite-based material or amorphous carbon-based material. The second anode active material particle 60 may include a plurality of sub-particles 61.

The sub-particles 61 included in the second anode active material particle 60 may include the graphite-based material or the amorphous carbon-based material. The graphite-based material may include artificial graphite and/or natural graphite.

The sub-particles 61 included in the second anode active material particles 60 may have a spherical shape, a flake shape, an amorphous shape, a plate shape, a rod shape, a polyhedral shape or a mixed shape thereof. The second anode active material particle 60 formed by an assembly of the sub-particles may have a spherical shape, a flake shape, an amorphous shape, a plate shape, a rod shape, a polyhedral shape or a mixed shape thereof.

Each second anode active material particle 60 may have a form in which a plurality of the sub-particles 61 are assembled. The plurality of the sub-particles 61 may form one second anode active material particle 60 as an integral unit. A chemical bond may be formed between the plurality of the sub-particles 61 included in one second anode active material particle 60. When the chemical bond is formed, a boundary between the sub-particles 61 may not be clearly distinguished, but the number of the sub-particles 61 may be estimated based on the number of cross-linking portions formed between the sub-particles 61.

Further, the second anode active material particle 60 including the plurality of the sub-particles 61 may include pores therein.

For example, one second anode active material particle 60 may include three or more sub-particles 61, four or more sub-particles 61, or five or more sub-particles 61.

Preferably, the second anode active material particles 60 may have a spherical shape. In this case, the pressing and capacity properties may be improved when being mixed with the first anode active material particles 50 including the coating layer 52.

In addition, the second anode active material particle 60 may be obtained from a granulation or a graphitization of a carbon-based precursor. In some embodiments, the carbon-based precursor may be coke or pitch. When using cokes as the carbon-based precursor, the granulation may be performed by mixing cokes and an adhesive pitch.

In some embodiments, the cokes may have a scale-shape, a fibrous shape, a mosaic shape, a spherical shape or a needle shape, and an average particle diameter (D₅₀) of cokes may be in a range from 3 µm to 15 µm.

The adhesive pitch may be included in an amount from about 5 parts by weight to 20 parts by weight, based on 100 parts by a total weight of the second anode active material particles. The adhesive pitch may be derived from petroleum, coal, artificial pitch or tar.

The carbon-based precursor and the adhesive pitch may be mixed in a temperature range of 400 °C to 1,000 °C to obtain an assembly. A high-temperature calcination process may be further performed for a further graphitization of the assembly. For example, the high-temperature calcination may be performed at a temperature of 2000 °C or higher.

Preferably, the granulation and the high-temperature calcination may be performed under an inert atmosphere such as a nitrogen atmosphere, an argon atmosphere, a vacuum, or the like.

In some embodiments, the high temperature calcination of the assembly may be performed at about 3000 °C or higher. In this case, pores may be easily formed, and a storage capacity of the second anode active material particles 60 may be improved. Preferably, the high-temperature calcination of the assembly may be performed at about 3500 °C or higher.

In a preferable embodiment. an average particle diameter of the second anode active material particles 60 may be greater than that of the first anode active material particles 50 including the coating layer formed on the surface thereof. Under the above-described conditions, a tap density of the anode active material may be improved.

In some embodiments, the average particle diameter of the second anode active material particles 60 may be in a range from 14 µm to 18 µm. For example, if the average particle diameter of the second anode active material particles 60 is less than 14 µm, compatibility with the core particles 51 may be reduced and sufficient tap density may not be obtained. If the average particle diameter of the second anode active material particles 60 exceeds 18 µm, the shape of the second anode active material particles 60 may be deformed by the pressing process or a sufficient specific surface area may not be achieved.

In some embodiments, the hardness of the first anode active material particles 50 may be greater than that of the second anode active material particles 60. The hardness of the first anode active material particle 50 may be increased by the coating layer 52 formed on the surface of the core particle 51.

Thus, destruction of the first anode active material particle 50 may be suppressed during the pressing, and power and capacity properties of the core particle 51 may be maintained even after the pressing.

According to exemplary embodiments, the anode for a secondary battery may be fabricated by methods and processes as described below.

For example, the core particles 51 including the graphite-based active material as described above may be prepared. Thereafter, the coating layer 52 may be formed on the core particles 51.

The coating layer 52 may be formed by a dry or wet coating method. In the case of using the wet coating method, pitch particles and the core particles 51 may be mixed and stirred. Thereafter, the pitch particles may be uniformly adsorbed to the surface of the core particles 51 through a heat treatment.

After the coating layer 52 is formed on the first anode active material particles 50, the first anode active material particles 50 and the second anode active material particles 60 may be mixed. In the mixing, a physical contact between the first anode active material particles 50 may be increased. In the mixing, a physical contact between the first anode active material particles 50 and the second anode active material particles 60 may also be increased. An agitation may be appropriately performed so that the first anode active material particles 50 and the second anode active material particles 60 may be uniformly mixed.

The mixed and stirred first anode active material particles 50 and second anode active material particles 60 may be coated on the anode current collector, and then pressed by, e.g., a roll press.

FIGS. 2 and 3 are a schematic plan view and a schematic cross-sectional view illustrating a secondary battery in accordance with exemplary embodiments. For example, FIG. 3 is a cross-sectional view taken along a line I-I' of FIG. 2 in a thickness direction of the secondary battery.

Referring to FIGS. 2 and 3 , the secondary battery may serve as a lithium secondary battery. In exemplary embodiments, the secondary battery may include the electrode assembly 150 and a case 160 accommodating the electrode assembly 150. The electrode assembly 150 may include a cathode 100, an anode 130 and a separation layer 140.

The cathode 100 may include a cathode current collector 105 and a cathode active material layer 110 formed on at least one surface of the cathode current collector 105. In exemplary embodiments, the cathode active material layer 110 may be formed on both surfaces (e.g., upper and lower surfaces) of the cathode current collector 105. For example, the cathode active material layer 110 may be coated on each of the upper and lower surfaces of the cathode current collector 105, and may be directly coated on the surface of the cathode current collector 105.

The cathode current collector 105 may include stainless-steel, nickel, aluminum, titanium, copper or an alloy thereof. Preferably, aluminum or an alloy thereof may be used.

The cathode active material layer 110 may include a lithium metal oxide as a cathode active material. In exemplary embodiments, the cathode active material may include a lithium (Li)-nickel (Ni)-based oxide.

In some embodiments, the lithium metal oxide included in the cathode active material layer 110 may be represented by Chemical Formula 1 below.

[Chemical Formula 1] Li₁₊ₐNi_{1-(x+y)}CoₓM_{y}O₂

In the Chemical Formula 1 above, -0.05≤a≤0.15, 0.01<x<0.2, 0≤y≤0.2, and M may include at least one element selected from Mn, Mg, Sr, Ba, B, Al, Si, Ti, Zr and W. In an embodiment, 0.01≤x≤0.20, 0.01≤y≤0.15 in Chemical Formula 1.

Preferably, in Chemical Formula 1, M may be manganese (Mn). In this case, nickel-cobalt-manganese (NCM)-based lithium oxide may be used as the cathode active material.

For example, nickel (Ni) may serve as a metal related to a capacity of a lithium secondary battery. As the content of nickel increases, capacity of the lithium secondary battery may be improved. However, if the content of nickel is excessively increased, life-span may be decreased, and mechanical and electrical stability may be degraded.

For example, cobalt (Co) may serve as a metal related to conductivity or resistance of the lithium secondary battery. In an embodiment, M may include manganese (Mn), and Mn may serve as a metal related to mechanical and electrical stability of the lithium secondary battery.

Capacity, power, low resistance and life-span stability may be improved together from the cathode active material layer 110 by the above-described interaction between nickel, cobalt and manganese.

For example, a slurry may be prepared by mixing and stirring the cathode active material with a binder, a conductive material and/or a dispersive agent in a solvent. The slurry may be coated on the cathode current collector 105, and then dried and pressed to form the cathode active material layer 110.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material or lithium metal oxide particles may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

In some embodiments, an electrode density of the cathode 100 may be in a range from 3.0 g/cc to 3.9 g/cc, preferably from 3.2 g/cc to 3.8 g/cc.

The anode 130 may include an anode current collector 125 and an anode active material layer 120 formed on at least one surface of the anode current collector 125. In exemplary embodiments, the anode active material layer 120 may be formed on both surfaces (e.g., upper and lower surfaces) of the anode current collector 125.

The anode active material layer 120 may be coated on each of the upper and lower surfaces of the anode current collector 125. For example, the anode active material layer 120 may directly contact the surface of the anode current collector 125.

The anode current collector 125 may include gold, stainless steel, nickel, aluminum, titanium, copper, or an alloy thereof, preferably may include copper or a copper alloy.

In exemplary embodiments, the anode active material layer 120 may include the anode active material according to the above-described exemplary embodiments. The anode active material may include the first anode active material particles 50 and the second anode active material particles 60.

For example, the anode active material may be included in an amount ranging from 80 wt% to 99 wt% based on a total weight of the anode active material layer 120. Preferably, the amount of the first anode active material particles 50 and the second anode active material particles 60 may be in a range from 90 wt% to 98 wt% based on the total weight of the anode active material layer 120.

For example, an anode slurry may be prepared by mixing and stirring the anode active material with a binder, a conductive material and/or a dispersive agent in a solvent. The anode slurry may be applied (coated) on the anode current collector 125, and then dried and pressed to form the anode active material layer 120.

The binder and the conductive material substantially the same as or similar to those used for forming the cathode 100 may be used in the anode 130. In some embodiments, the binder for forming the anode 130 may include, e.g., styrene-butadiene rubber (SBR) or an acrylic binder for compatibility with the graphite-based active material, and carboxymethyl cellulose (CMC) may also be used as a thickener.

In exemplary embodiments, an electrode density of the anode active material layer 120 may be 1.4 g/cc to 1.9 g/cc.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation to further improve power and capacity of the secondary battery.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethyl ene/methacrylate copolymer, or the like. The separation layer 140 may also include a non-woven fabric formed from a glass fiber with a high melting point, a polyethylene terephthalate fiber, or the like.

The separation layer 140 may extend in a width direction of the secondary battery between the cathode 100 and the anode 130, and may be folded and wound along the thickness direction of the lithium secondary battery. Accordingly, a plurality of the cathodes 100 and the anodes 130 may be stacked in the thickness direction using the separation layer140.

In exemplary embodiments, an electrode cell may be defined by the cathode 100, the anode 130 and the separation layer 140, and a plurality of the electrode cells may be stacked to form the electrode assembly 150 that may have e.g., a jelly roll shape. For example, the electrode assembly 150 may be formed by winding, laminating or folding the separation layer 140.

The electrode assembly 150 may be accommodated together with an electrolyte in the case 160. The case 160 may include, e.g., a pouch, a can, etc.

In exemplary embodiments, a non-aqueous electrolyte may be used as the electrolyte.

The non-aqueous electrolyte solution may include a lithium salt and an organic solvent. The lithium salt may be represented by Li⁺X⁻ , and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 2, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

FIG. 2 illustrates that the cathode lead 107 and the anode lead 127 are positioned at the same side of the lithium secondary battery or the case 160, but the cathode lead 107 and the anode lead 127 may be formed at opposite sides to each other.

For example, the cathode lead 107 may be formed at one side of the case 160, and the anode lead 127 may be formed at the other side of the case 160.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Example 1

100 g of artificial graphite (D₅₀: 8.4 µm) and 20 g of petroleum pitch (D₅₀ of pitch particles: 2.6 µm, Dₘₐₓ: 15 µm) were put into a mixer (manufactured by Inoue) and mixed at a stirring speed of 20 Hz for 30 minutes, followed by a calcination at 1,200 °C to prepare first anode active material particles having a coating layer formed on a surface thereof. An average particle diameter of the first anode active material particles was 8.6 µm, and a content ratio (coating amount) of the coating layer was 0.5 wt% based on to 100 parts by weight of the first anode active material particles. A thickness of the coating layer estimated from a change in average particle diameters before and after the coating was about 0.2 µm.

Needle-type cokes having an average particle diameter (D₅₀) of about 8 µm and a binder (adhesive pitch) were mixed in a weight ratio of about 9:1, and granulated at a temperature of 600 °C to obtain a precursor in the form of granules. The precursor was graphitized under an inert (Ar) gas atmosphere at a temperature of 3,000 °C for 12 hours or more to prepare second anode active material particles.

30 parts by weight of the first anode active material particles and 70 parts by weight of the second anode active material particles (D50: 16 µm) were put into a mixer and mixed at a stirring speed of 5 Hz for 10 minutes to prepare an anode active material.

The anode active material prepared as described above, CMC and SBR were mixed in a weight ratio of 97.3:1.2:1.5 to prepare an anode slurry. The anode slurry was coated on a Cu foil, dried and pressed to prepare an anode having a specific surface area (SSA) of 1.74 m²/g and a tap density of 0.93 g/cc.

A coin cell type secondary battery was prepared using a Li foil as a counter electrode and an electrolyte containing 1M LiPF₆ solution in an EC:EMC=3:7 mixed solvent.

### Examples 2 to 12

In Examples 2 to 12, the second anode active material particles were prepared by the same method as that in Example 1, except that compositions and weights of the petroleum-based pitch having a residual carbon amount of 60% were changed to modify the coating layer formed on the surface of the core particle. The compositions of the pitch used in Examples 2 to 12 and properties of the coating layer derived therefrom are shown in Table 1 below.

A tap density was measured using a density meter (Autotap, Quantachrome). Specifically, 100 ml cylinder was filled with 25 g of the first anode active material particles, tapping and rotation were simultaneously performed 3000 times, and then the tap density was measured.

A specific surface area was measured using Macsorb HM (model 1210) of MOUNTECH. Specifically, while flowing a mixed gas of nitrogen and helium (N₂: 30 vol%, He: 70 vol%) through the anode active material, the specific surface area was measured by a BET one-point method. The tap density and specific surface area measured for each Examples and Comparative Examples are shown in Table 1 below.

**[Table 1]**

| | | pitch particles D₅₀(µm) | pitch particles Dₘₐₓ(µm) | coating amount (wt%) | average particle diameter (µm)^{∗} | tap density (g/cc) | specific surface area (m²/g) |
|---|---|---|---|---|---|---|---|
| Examples | 1 | 2.6 | 15 | 0.5 | 8.6 | 0.97 | 1.88 |
| | 2 | | | 0.75 | 8.7 | 0.93 | 1.75 |
| | 3 4 | | | 1 | 9.1 | 0.93 | 1.74 |
| | | | | 1.3 | 9.3 | 0.91 | 1.74 |
| | 5 6 | | | 1.5 | 9.6 | 0.90 | 1.75 |
| | | | | 2 | 10.1 | 0.88 | 1.35 |
| | 7 | | | 3 | 11.2 | 0.86 | 1.23 |
| | 8 | - 2.8 | 18 | 1 | 9.5 | 0.90 | 1.79 |
| | 9 | | | 0.75 | 9 | 0.91 | 1.80 |
| | 10 | 1.9 | 11 | 1 | 8.6 | 0.98 | 1.87 |
| | 11 | 3.6 | 26 | 1 | 12.4 | 0.85 | 1.02 |
| | 12 | 2.8 | 20 | 1 | 10.2 | 0.88 | 1.8 |

| | | | | | | | |
|---|---|---|---|---|---|---|---|
| ^{∗} average particle diameter of the first anode active material particles including the coating layer formed thereon | | | | | | | |

### Comparative Example

First anode active material particles and second anode active material particles were prepared by the same method as that in Example 1, except that the core particles were not coated with petroleum-based pitch. An average particle diameter of the first anode active material particles was 8.4 µm. An anode including the first anode active material particles without the coating layer and the second anode active material particles was formed by the same method as that in Example 1. The anode had a tap density of 1.01 g/cc and a specific surface area of 2.29 m²/g.

### Experimental Example 1

### (1) Evaluation on high temperature storage property

The secondary batteries of Examples and Comparative Example were stored in an oven at 60 °C at 100% SOC for 12 weeks, and then a retention capacity ratio was measured.

### (2) Evaluation on high rate charging property

After repeating 40 cycles of charging and discharging at a 2.0 C charge/0.33C discharge c-rate in a chamber maintained at 25° C, a retention capacity ratio was measured.

The evaluation results are shown in Table 2 below.

**[Table 2]**

| | | high temperature storage property (retention capacity ratio, %) | high rate charging property (retention capacity ratio, %) |
|---|---|---|---|
| Examples | 1 | 82 | 75 |
| | 2 | 92 | 82 |
| | 3 | 94 | 85 |
| | 4 | 88 | 84 |
| | 5 | 84 | 83 |
| | 6 | 63 | 74 |
| | 7 | 59 | 70 |
| | 8 | 85 | 73 |
| | 9 | 87 | 70 |
| | 10 | 90 | 84 |
| | 11 | 53 | 68 |
| | 12 | 78 | 71 |
| Comparative Example | 1 | 85 | 63 |

In the retention capacity ratio values in Table 2, all decimal places were rounded down.

Referring to Table 2, in the anode active materials of Examples 2 to 5, and 8 to 10, the retention capacity exceeded 85% even after the storage at high temperature of 60 °C for 12 weeks. In Example 2, Example 3 and Example 10, the retention capacity exceeded 90% even after the high-temperature storage.

In Example 1, the high-temperature storage properties were relatively reduced due to the relatively small thickness of the coating layer. In Examples 6, 7, 11 and 12, the coating layer became non-uniform due to aggregation of the pitch particles and the high-temperature storage properties were relatively degraded.

The anode active materials according to Examples provided improved high-rate charging property compared to that from the anode active material of Comparative Example. For example, in Examples 2 to 5 and Example 10, the retention capacity exceeded 80% even after the repeated high-rate charging.

In Example 2, as the thickness of the coating layer decreased, the high-rate charging property was relatively degraded. In Examples 6 and 7, as the thickness of the coating layer increased, the improvement of high-rate charging property was relatively insufficient. In Examples 11 and 12, as the average particle diameter and the maximum particle diameter of the pitch particles increased, aggregation of the pitch particles and nonuniformity of the coating layer occurred, and the improvement of high-temperature storage and high-rate charging properties was relatively insufficient.

## Claims

1. An anode for a secondary battery, comprising:
first anode active material particles in a form of a single particle, each of the first anode active material particles comprising a core particle and a coating layer formed on a surface of the core particle; and
second anode active material particles including a carbon-based material and having an assembly form of a plurality of sub-particles.

2. The anode for a secondary battery of claim 1, wherein the core particle comprises a graphite-based active material, an amorphous carbon-based material or a mixture of the graphite-based active material and the amorphous carbon-based material.

3. The anode for a secondary battery of claim 1, wherein the core particle comprises artificial graphite.

4. The anode for a secondary battery of claim 1, wherein the coating layer is formed of an amorphous carbon-based material.

5. The anode for a secondary battery of claim 1, wherein the coating layer is formed from pitch particles.

6. The anode for a secondary battery of claim 5, wherein the average particle diameter of the pitch particles used to form the coating layer is in a range from 1.5 µm to 3 µm.

7. The anode for a secondary battery of claim 5, wherein a maximum particle diameter of the pitch particles used to form the coating layer is 20 µm or less.

8. The anode for a secondary battery of claim 1, wherein an average particle diameter of the core particle is in a range from 5 µm to 10 µm.

9. The anode for a secondary battery of claim 1, wherein a content of the coating layer is in a range from 0.5 parts by weight to 3 parts by weight based on 100 parts by weight of the first anode active material particles.

10. The anode for a secondary battery of claim 1, wherein the second anode active material particles comprise a graphite-based active material, an amorphous carbon-based material or a mixture of the graphite-based active material and the amorphous carbon-based material.

11. The anode for a secondary battery of claim 1, wherein the second anode active material particles comprise artificial graphite.

12. The anode for a secondary battery of claim 1, wherein an average particle diameter of the second anode active material particles is greater than an average particle diameter of the first anode active material particles.

13. The anode for a secondary battery of claim 1, wherein an average particle diameter of the second anode active material particles is in a range from is 14 µm to 18 µm.

14. The anode for a secondary battery of claim 1, wherein a hardness of the first anode active material particles is greater than a hardness of the second anode active material particles.

15. A secondary battery, comprising:
an anode comprising lithium metal oxide; and
the anode for a secondary battery of claim 1 facing the cathode.
